# EUROPEAN PATENT APPLICATION

(11) **EP 4 729 341 A1**
(43) Date of publication of application: **22.04.2026**
(21) Application number: 24822388.5
(22) Date of filing: 17.04.2024
(51) Int. Cl.: B60L 53/20, H02P 21/18

(54) **VEHICLE VOLTAGE CONVERSION SYSTEM, AND VEHICLE VOLTAGE CONVERSION CONTROLLER AND CONTROL METHOD THEREFOR**

(30) Priority: 16.06.2023 CN 202310728082
(71) Applicant: XPT EDS (Hefei) Co., Ltd., Hefei City, Anhui 230601 (CN)
(72) Inventor: ZHOU, Daiping, Hefei, Anhui 230601 (CN); WANG, Yunsong, Hefei, Anhui 230601 (CN); WANG, Shun, Hefei, Anhui 230601 (CN); YE, Nan, Hefei, Anhui 230601 (CN)
(74) Representative: Vossius & Partner Patentanwälte Rechtsanwälte mbB
(86) International application number: PCT/CN2024/088253
(87) International publication number: WO 2024/255433

(57) **Abstract**

The disclosure relates to a vehicle voltage conversion system and a method therefor, a vehicle voltage conversion controller and a control method therefor, a computer-readable storage medium, an electronic device, and a vehicle. The vehicle voltage conversion system of the disclosure includes a three-phase motor, a motor drive control circuit, a charging port, and a vehicle voltage conversion controller. The motor drive control circuit is connected between a traction battery of the vehicle and the three-phase motor, and includes three switch bridge arms connected in parallel with each other. The charging port includes a first output terminal and a second output terminal, the first output terminal being connected to a midpoint of a switch bridge arm corresponding to each winding of the three-phase motor via the respective winding, and the second output terminal being connected to one electrode of the traction battery. The vehicle voltage conversion controller is configured to select, based on a rotor position angle of the three-phase motor and by controlling turn-on and turn-off of the three switch bridge arms, two phases of windings among the windings of the three-phase motor that generate larger inductance values to perform voltage conversion between the charging port and the traction battery.

## Description

### Technical Field

The disclosure relates to the field of electric energy conversion, and in particular to a vehicle voltage conversion system, a vehicle voltage conversion controller and a control method therefor, a computer-readable storage medium, an electronic device, and a vehicle.

### Background Art

Currently, there is a problem that a supply voltage of a DC charging facility does not match a charging voltage of an electric vehicle. For example, the operating voltages of the mainstream high-voltage system platforms for electric vehicles currently on the market are 400 V and 800 V, but those of charging facilities are generally 500 V, 750 V, 1000 V, etc., which cannot directly charge the electric vehicles or cannot fully charge them. Therefore, a corresponding voltage conversion control device and method are required, and it is desirable to reduce costs, improve motor inductance utilization, and reduce a voltage conversion loss and heat generation.

### Summary

In view of the aforementioned problem, the disclosure is intended to provide a vehicle voltage conversion system, a vehicle voltage conversion controller and a control method therefor, a computer-readable storage medium, an electronic device, and a vehicle.

According to a first aspect of the disclosure, a vehicle voltage conversion system is provided, which includes a three-phase motor, a motor drive control circuit, a charging port, and a vehicle voltage conversion controller. The charging port includes a first output terminal and a second output terminal, the first output terminal being connected to a midpoint of a switch bridge arm corresponding to each winding of the three-phase motor via the respective winding, and the second output terminal being connected to one electrode of the traction battery. The vehicle voltage conversion controller is configured to select, based on a rotor position angle of the three-phase motor and by controlling turn-on and turn-off of the three switch bridge arms, two phases of windings among the windings of the three-phase motor that generate larger inductance values to perform voltage conversion between the charging port and the traction battery.

In the vehicle voltage conversion system according to an embodiment of the disclosure, the switch bridge arms each include two switch modules connected in series with each other, each of the switch modules including a MOSFET switch and a diode connected in parallel with each other, and the vehicle voltage conversion controller is further configured to control a switching control signal for the MOSFET switch to determine one of the MOSFET switch and the diode for turning on the switch module.

In the vehicle voltage conversion system according to an embodiment of the disclosure, the vehicle voltage conversion controller is further configured to allocate currents of the selected two phases of windings based on the rotor position angle, such that during the voltage conversion, a flux linkage synthesized by the two phases of windings contains no component on a direct axis perpendicular to a rotor flux linkage direction of the three-phase motor.

In the vehicle voltage conversion system according to an embodiment of the disclosure, the vehicle voltage conversion controller is further configured to allocate currents of the selected two phases of windings based on the rotor position angle, such that during the voltage conversion, a magnitude of a direct-axis component of a current vector synthesized by the two phases of windings is equal to a magnitude of a flux linkage of a permanent magnet of the three-phase motor divided by a difference between a direct-axis inductance and a quadrature-axis inductance of the three-phase motor.

In the vehicle voltage conversion system according to an embodiment of the disclosure, the vehicle voltage conversion controller is further configured to make control signals for switching of switch bridge arms in the two phases of windings be phase-interleaved with each other.

According to a second aspect of the disclosure, a vehicle voltage conversion controller is provided. The vehicle voltage conversion controller is configured to select, based on a rotor position angle of a three-phase motor of the vehicle and by controlling turn-on and turn-off of switch bridge arms of a motor drive control circuit of the three-phase motor, two phases of windings among the windings of the three-phase motor that generate larger inductance values to perform voltage conversion between a charging port and a traction battery of the vehicle, wherein the charging port includes a first output terminal and a second output terminal, the first output terminal being connected to a midpoint of a switch bridge arm corresponding to each winding of the three-phase motor via the respective winding, and the second output terminal being connected to one electrode of the traction battery.

According to a third aspect of the disclosure, a vehicle is provided. The vehicle includes the vehicle voltage conversion controller or the vehicle voltage conversion system according to any one of the preceding embodiments.

According to a fourth aspect of the disclosure, a voltage conversion control method is provided. The control method includes the following steps: receiving a detected rotor position angle of a three-phase motor of a vehicle; and selecting, based on the rotor position angle and by controlling turn-on and turn-off of switch bridge arms of a motor drive control circuit of the three-phase motor, two phases of windings among the windings of the three-phase motor that generate larger inductance values to perform voltage conversion between a charging port and a traction battery of the vehicle.

In the control method according to an embodiment of the disclosure, the switch bridge arms each include two switch modules connected in series with each other, each of the switch modules including a MOSFET switch and a diode connected in parallel with each other, and controlling of the switch modules of the switch bridge arms includes: determining one of the MOSFET switch and the diode for turning on the switch module.

The control method according to an embodiment of the disclosure further includes: allocating currents of the selected two phases of windings based on the rotor position angle, such that during the conversion, a flux linkage synthesized by the two phases of windings contains no component on a direct axis perpendicular to a rotor flux linkage direction of the three-phase motor, wherein the charging port includes a first output terminal and a second output terminal, the first output terminal being connected to a midpoint of a switch bridge arm corresponding to each winding of the three-phase motor via the respective winding, and the second output terminal being connected to one electrode of the traction battery.

The control method according to an embodiment of the disclosure further includes: allocating currents of the selected two phases of windings based on the rotor position angle, such that during the conversion, a magnitude of a direct-axis component of a current vector synthesized by the two phases of windings is equal to a magnitude of a flux linkage of a permanent magnet of the three-phase motor divided by a difference between a direct-axis inductance and a quadrature-axis inductance of the three-phase motor.

The control method according to an embodiment of the disclosure further includes: making control signals for switching of switch bridge arms in the two phases of windings be phase-interleaved with each other.

According to a fifth aspect of the disclosure, a computer-readable storage medium is provided. The computer-readable storage medium has instructions stored therein, wherein the instructions, when executed by a processor, cause the processor to perform the voltage conversion control method according to any one of the preceding embodiments.

According to a sixth aspect of the disclosure, an electronic device is provided. The electronic device includes a memory and a processor. The memory stores instructions, wherein the instructions, when executed by the processor, cause the processor to perform the voltage conversion control method according to any one of the preceding embodiments.

The disclosure reduces hardware costs for voltage conversion control by utilizing the motor drive control circuit and windings of the electric vehicle itself to perform voltage conversion control. Furthermore, this can be implemented using only two phases of windings, reducing winding losses. The selected two phases of windings can utilize the inductance generated inside the motor to a greater extent, and do not generate additional torque or generate minimal additional torque, thereby alleviating heat generation problems. In addition, the motor can be further optimized to achieve zero torque output from the motor, reduce eddy current losses in the motor, mitigate the impact of input/output ripple, and improve the charging efficiency.

### Brief Description of the Drawings

The above and other objectives and advantages of the disclosure will be more thorough and clearer from the following detailed description in conjunction with the drawings, where the same or similar elements are represented by the same reference numerals.
FIG. 1 is a schematic diagram of a vehicle voltage conversion system 100 according to one or more embodiments of the disclosure.
FIG. 2 is a schematic diagram of an exemplary correspondence between rotor position angles and winding selections according to one or more embodiments of the disclosure.
FIG. 3 is a schematic diagram of a correspondence between rotor position angles θ and self-inductance of three phases of windings;
FIG. 4A is a schematic diagram of current allocation for two phases of windings that is adopted for a current in sector 3 of FIG. 2.
FIG. 4B is a schematic diagram of current allocation for two phases of windings that is adopted for a current in sector 2 of FIG. 2.
FIG. 5 is a schematic diagram of waveforms of operating signals for switch modules corresponding to the selected two phases of windings.
FIG. 6 is a schematic diagram of distributions of current vectors for two d-axis angles.
FIG. 7 is a schematic flowchart of a voltage conversion control method 700 according to one or more embodiments of the disclosure.

### Detailed Description of Embodiments

The following descriptions of the specific embodiments are merely exemplary in nature, and are not intended to limit the disclosed technologies or the application and use of the disclosed technologies. In addition, there is no intention to be bound by any expressed or implied theory presented in the foregoing Technical Field and Background Art, or the following Detailed Description.

In the following detailed descriptions of the embodiments, many specific details are set forth to provide a more thorough understanding of the disclosed technologies. However, it is obvious for those of ordinary skill in the art that the disclosed technologies can be practiced without these specific details. In other instances, well-known features are not detailed, to avoid complicating the descriptions unnecessarily.

The terms such as "include" and "comprise" are used to indicate that in addition to units and steps that are directly and clearly described in this specification, other units and steps that are not directly or clearly described are not excluded in the technical solutions of the disclosure.

Various exemplary embodiments according to the disclosure will be described below in detail with reference to the accompanying drawings.

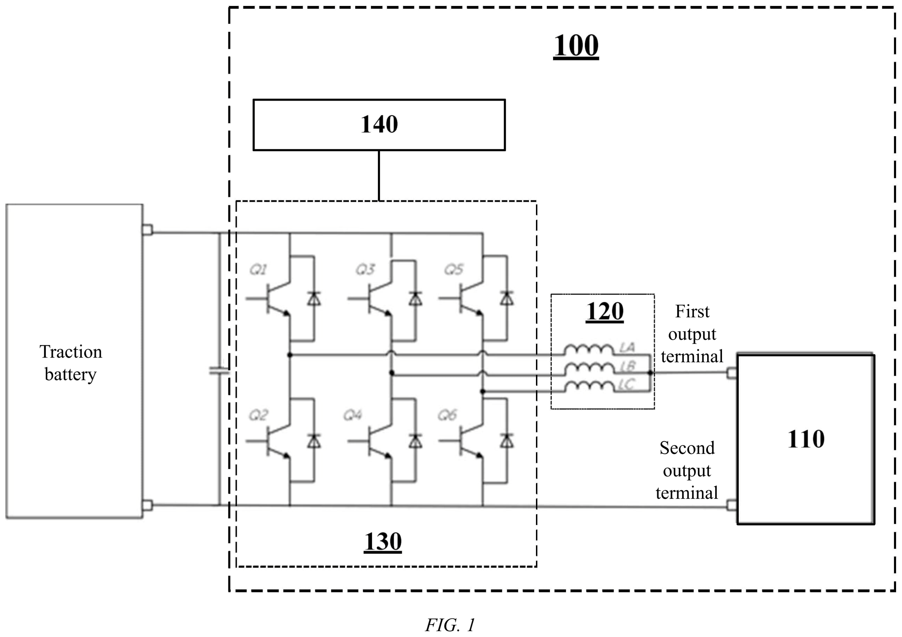

FIG. 1 is a schematic diagram of a vehicle voltage conversion system 100 including a vehicle voltage conversion controller according to one or more embodiments of the disclosure. The voltage conversion system 100 is connected to a traction battery and includes a charging port 110, a three-phase motor 120, a motor drive control circuit 130, and a vehicle voltage conversion controller 140. The voltage conversion system 100 utilizes the motor drive control circuit 130 inherently possessed by the vehicle itself to convert external electric energy delivered by the charging port 110 of the vehicle, so as to convert it into a form suitable for charging the traction battery, or to convert an output voltage from the traction battery for output.

In FIG. 1, the motor drive control circuit 130 is connected to the two electrodes of the vehicle traction battery and includes three switch bridge arms and six corresponding switch modules (Q1-Q6), each switch bridge arm being composed of two switch modules connected in series in an upper and lower configuration. A midpoint of each switch bridge arm is connected to a first output terminal of the charging port 110 via one winding, and a second output terminal of the charging port 110 is connected to one electrode (e.g., a negative electrode) of the traction battery. The traction battery may further be connected in parallel with a capacitor. It can be understood that in FIG. 1, the connections of the traction battery, the motor drive circuit, and the windings (represented by inductor symbols) are all conventional circuit designs and configurations for drive motors of electric vehicles in the field, which will not be elaborated here.

However, as shown in FIG. 1, in terms of circuit structure, in the disclosure, the first output terminal of the charging port is further connected to the other end of each phase winding, such that the first output terminal is connected to a midpoint of a switch bridge arm corresponding to each winding of the motor via the respective winding. That is, the same ends of the three windings are connected together and jointly connected to the first output terminal of the charging port. Such a circuit structure can utilize winding inductance for voltage conversion to a larger extent. Additionally, the first output terminal is connected to the same ends of all phases of windings, which also advantageously leverages the hardware layout of the vehicle electric drive, eliminating the need for complex circuit designs to pass through winding housings or barriers to connect to the other ends of the windings (i.e., the left end of each inductor symbol in FIG. 1). Meanwhile, the disclosure does not require setting up additional switches for winding selection; instead, it utilizes the switches of the motor drive circuit itself.

Specifically, the charging port 110 includes a first output terminal and a second output terminal for providing electric power input from, for example, an external charging pile. The first output terminal of the charging port 110 is connected to a midpoint of each switch bridge arm of the motor drive control circuit 130 corresponding to each phase. That is, the first output terminal is connected to a midpoint of a switch bridge arm of each phase of the motor drive control circuit, and a corresponding phase of winding of the motor 120 is connected on a connection line between the midpoint of the switch bridge arm of each phase and the first input terminal of the charging port 110. In addition to being connected to the charging port 110 as described above, the two input terminals of the motor drive control circuit 130 are connected to the two electrodes of the traction battery, so as to receive power supply from the vehicle traction battery and thus drive the three-phase motor in normal driving scenarios. The vehicle voltage conversion controller 140 is connected to the motor drive control circuit 130 and provides control signals for the various switches to it. The vehicle voltage conversion controller 140 selects and activates two corresponding switch bridge arms in the motor drive control circuit 130 based on a detected current rotor position angle of the motor 120, to perform voltage conversion control from the charging port 110 to the two electrodes of the traction battery. For example, after the vehicle voltage conversion controller 140 receives the rotor position angle of the motor detected by the vehicle motor rotor detection device, it selects switching actions for the switch bridge arms of the two phases of windings based on the magnitude of the rotor position angle (e.g., turning on control switches of the motor drive control circuit for the two phases of windings and turning off the switch for the other phase), so as to activate the two switch bridge arms and perform voltage conversion, where the switching actions include turning on switches and turning off switches.

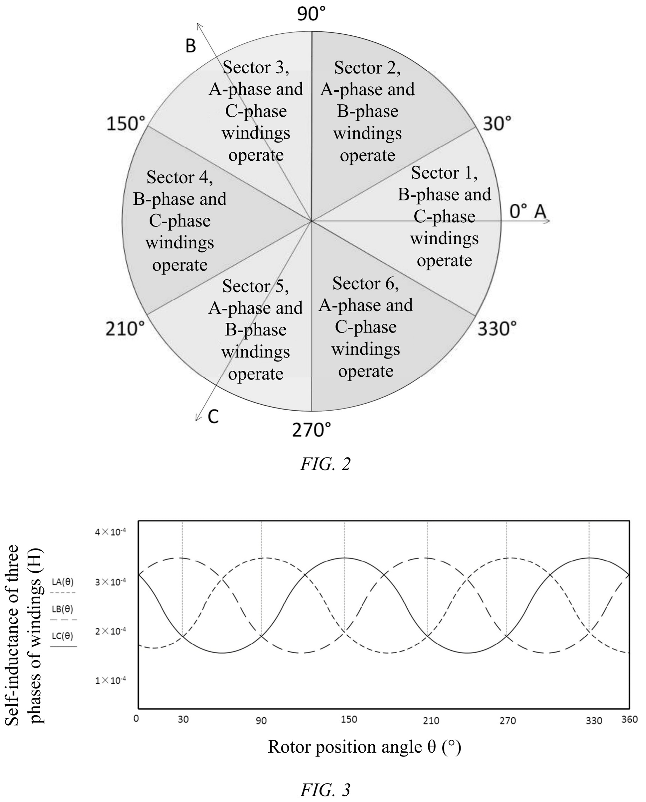

FIG. 2 is a schematic diagram of an exemplary correspondence between rotor position angles and winding selections according to one or more embodiments of the disclosure, where the three-phase motor includes, for example, A, B, and C, three phases of windings. For example, taking a direction of a magnetic field synthesized by the A-phase winding of the motor as 0°, and rotating counterclockwise for one revolution, a range from 330° to 30° is defined as sector 1, and sectors 1 to 6 are named sequentially counterclockwise. Thus, for example, when the rotor position angle θ of the motor is within the range of sector 1, the B-phase winding and the C-phase winding are selected for voltage conversion. Accordingly, based on the currently detected rotor position angle, it can be determined which two switch bridge arms (and corresponding windings) should have their switches activated to put the corresponding two phases of windings into operation, while the other phase of winding remains inoperative. This winding selection can cause a direction of a synthetic magnetic field generated by the selected two sets of windings to be substantially concentrated on a quadrature axis (q-axis) of the motor. It can be understood that the above sector division is merely exemplary, and different sector sizes and angular division methods can also be designed based on a criterion that the direction of the synthetic magnetic field generated by the selected two sets of windings is substantially concentrated on the quadrature axis of the motor. For example, as shown in FIG. 3, a relationship between the corresponding rotor position angles θ (in radians or electrical degrees, within a 2π range) and self-inductances LA(θ), LB(θ), and LC(θ) of the three phases of windings is shown. According to variations of self-inductance with the rotor position angle, six sectors can be obtained through division. In each sector, self-inductance values of the corresponding two phases of windings are always greater than that of the remaining one phase of winding.

Through the above control performed by the vehicle voltage conversion controller 140, the motor drive control circuit 130 of the vehicle itself can be utilized to perform voltage conversion, such that a voltage of external electric energy is made suitable for charging the traction battery. This eliminates the need for the provision of additional voltage conversion modules/devices, and since inductance is generated by the windings themselves, it further reduces hardware volume and weight of the vehicle control system. More importantly, the vehicle voltage conversion controller 130 in the disclosure selects only two phases of windings and corresponding switch modules to perform electric energy voltage conversion, thereby reducing the use and loss of one winding. Furthermore, sector division and winding selection also take into account the direction of the magnetic field and the quadrature axis of the motor, effectively reducing or eliminating generation of additional torque, thereby improving the safety during the voltage conversion.

Preferably, each switch module may also be connected in parallel with a diode as shown in FIG. 1. That is, each switch bridge arm may include two switch modules connected in series with each other, and each switch module further includes a MOSFET switch (i.e., Metal-Oxide-Semiconductor Field-Effect Transistor (MOSFET)) and a diode connected in parallel with each other. The vehicle voltage conversion controller 140 is further configured to control a switching control signal for the MOSFET switch to determine one of the MOSFET switch and the diode for turning on the switch module. In this way, control signals for the switches can be determined as needed. For example, in Q1, turning on the MOSFET and turning off the diode may be selected, or turning on the diode and turning off the MOSFET may be selected, where the former utilizes MOSFET channel conduction and results in smaller circuit losses. It can be understood that the disclosure is not limited to using MOSFET switches, but other types of controlled switches (e.g., Insulated Gate Bipolar Transistors (IGBTs), etc.) may alternatively be used.

After the vehicle voltage conversion controller 140 receives a current rotor position angle of the motor, it selects the corresponding two phases of windings based on a sector correspondence to which reference is made, and controls switching of switch bridge arms of the two phases of windings. Taking selection of sector 3 (selecting the A-phase and C-phase windings) in FIG. 2 as an example, switches Q3 and Q4 corresponding to the B-phase winding in FIG. 1 can be kept turned off, and for example, Q1 and Q5 can be turned on while Q2 and Q6 can be turned off (or relative to the second output terminal of the charging port being connected to another electrode of the traction battery, Q1 and Q5 are turned off and Q2 and Q6 are turned on). In this way, inductance generated by the A-phase and C-phase switch bridge arms of the motor drive control circuit and corresponding windings can be utilized to form a voltage conversion module (e.g., forming a parallel-interleaved boost converter or buck converter), thereby achieving voltage boosting or bucking functions.

In some embodiments, the vehicle voltage conversion controller is further configured to allocate currents of the selected two phases of windings based on the rotor position angle, such that during the voltage conversion, a flux linkage synthesized by the two phases of windings contains no component on a direct axis (d-axis) perpendicular to a rotor flux linkage direction of the motor. Specifically, after the two phases of windings for voltage conversion have been selected, generation of undesired torque can be greatly reduced or eliminated. The disclosure can further determine current distribution between the selected two phases of windings based on a specific magnitude of the detected current rotor position angle, such that the flux linkage synthesized by the two phases of windings contains no component on the direct axis (d-axis) perpendicular to the rotor flux linkage direction of the motor, and an AC magnetic field (or AC ripple current) is on the q-axis to reduce rotor losses, while a DC magnetic field (or DC current) synthesized by the two phases is on the d-axis, thereby achieving zero torque output of the motor while reusing motor windings for a vehicle boost charging process. Furthermore, since an AC component in a charging current is a source of eddy current losses in magnet steel of the motor rotor during charging, and a q-axis inductance of a synchronous motor is relatively small, applying the AC component of the charging current on the q-axis is beneficial for reducing eddy current losses, thereby improving the charging efficiency and safety.

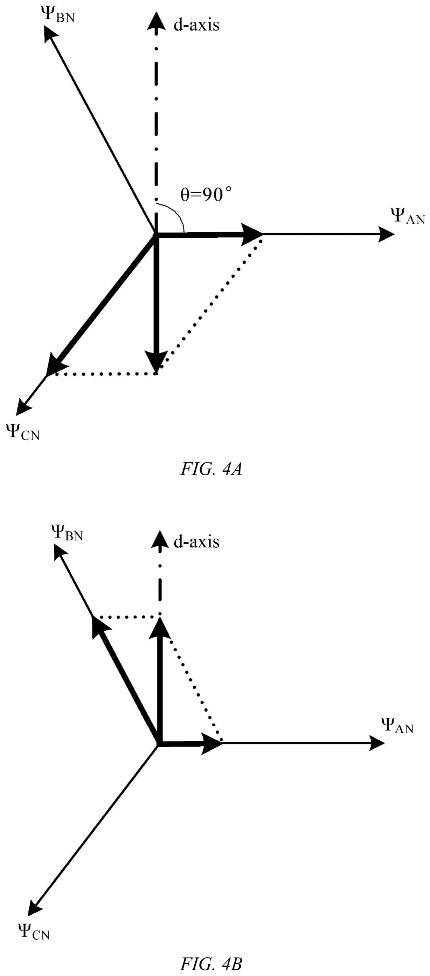

Regarding specific allocation methods, corresponding to the sector division in FIG. 2, FIG. 4A shows an example of current allocation for two phases of windings that is adopted for the current in sector 3 (the same applies to sectors 1 and 5). In this case, the magnetic field directions of the two phases A and C are as indicated by the bold arrows of the flux linkages Ψ_{AN} and Ψ_{CN}, and the magnetic field directions thereof resulting from trigonometric synthesis are concentrated on the direct axis (d-axis) and are opposite. Furthermore, FIG. 4B shows current allocation for two phases of windings that is adopted for the current in sector 2 (the same applies to sectors 2 and 4). In this case, magnetic field directions of the two phases A and B are as indicated by the bold arrows of the flux linkages Ψ_{AN} and Ψ_{BN}, and the magnetic field directions thereof resulting from trigonometric synthesis is concentrated on the direct axis (d-axis) and are the same.

In some other embodiments, the allocation methods of current may also be based on the rotor position angle, such that during the voltage conversion, a magnitude of a direct-axis component of a current vector synthesized by the two phases of windings is equal to a magnitude of a flux linkage of a permanent magnet of the motor divided by a difference between a direct-axis inductance and a quadrature-axis inductance of the motor. In this way, current can be effectively allocated in charging scenarios with large charging current, achieving zero torque output of the motor.

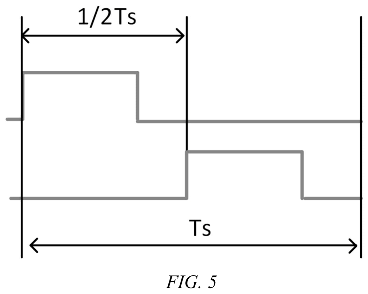

In some embodiments, the vehicle voltage conversion controller is further configured to make control signals for switching actions of switch bridge arms in the two phases of windings be phase-interleaved with each other, such that the two switch bridge arms are turned on and off in an interleaved manner. For example, in the waveforms of the operating signals for switch modules corresponding to the two phases of windings as shown in FIG. 5, taking sector 3 from FIG. 2 or FIG. 3 as an example, operating signals for the switch modules (i.e., Q1 and Q5) of the A-phase and C-phase windings are kept phase-interleaved (e.g., interleaved by 180°, but it can be understood that other phase values allowing for interleaved control are also included). In this way, an effect of significantly reducing eddy current losses of magnet steel in the windings can be achieved, and the impact of input/output ripple can be reduced to a greater extent.

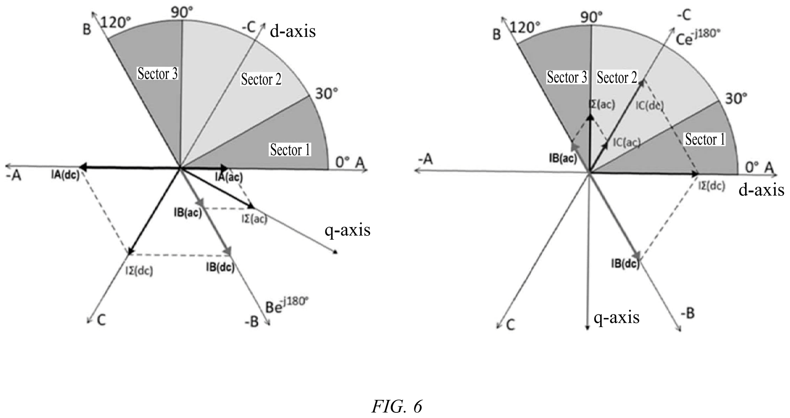

FIG. 6 shows the distributions of current vectors IA(dc), IA(ac), IB(ac), and IB(dc) when the d-axis is at 0° and 60°. It can be seen that the AC current vectors IΣ(ac) of the two phases of windings are concentrated in the q-axis direction while the DC current vector IΣ(dc) is located on the d-axis. In this way, an effect of significantly reducing eddy current losses of magnet steel in the windings can be achieved, and the impact of input/output ripple is reduced as much as possible.

According to another aspect of the disclosure, a vehicle is provided. The vehicle may include the vehicle voltage conversion system or the vehicle voltage conversion controller according to any one of the embodiments above. The vehicle in the disclosure is intended to indicate any suitable vehicle having a drive system, for example, a hybrid vehicle, an electric vehicle, a plug-in hybrid electric vehicle, and the like.

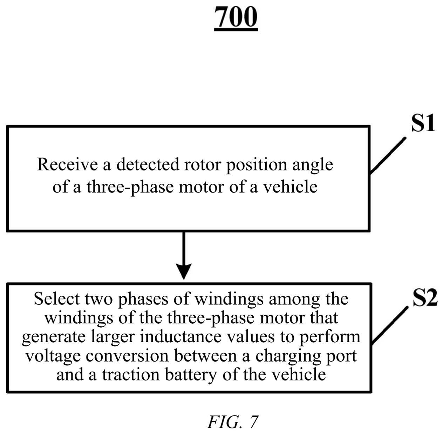

FIG. 7 is a flowchart of a voltage conversion control method 700 according to one or more embodiments of the disclosure. The method 700 includes the following steps.

S1: Receive a detected rotor position angle of a motor of a vehicle, which may be receiving, via a controller, a current rotor position angle of the motor that is detected by a vehicle motor rotor detection device.

S2: Select, based on the rotor position angle and by controlling switching actions of switch bridge arms of a drive control circuit of the motor, two phases of windings among the three phases of windings of the motor that generate larger inductance values to perform voltage conversion between a charging port and a traction battery of the vehicle. For example, after the vehicle voltage conversion controller 140 receives the rotor position angle of the motor detected by the vehicle motor rotor detection device, it selects switching actions for the switch bridge arms of the two phases of windings based on the magnitude of the rotor position angle (e.g., turning on control switches of the motor drive control circuit for the two phases of windings and turning off the switch for the other phase), so as to activate the two switch bridge arms and perform voltage conversion, where the switching actions include turning on switches and turning off switches. Herein, FIG. 2 is a schematic diagram of an exemplary correspondence between rotor position angles and winding selections.

Through the above control steps, the motor drive control circuit of the vehicle itself can be utilized to perform voltage conversion, such that a voltage of external electric energy is made suitable for charging the traction battery. This eliminates the need for the provision of additional voltage conversion modules/devices, and since inductance is generated by the windings themselves, it further reduces hardware volume and weight of the vehicle control system. More importantly, the vehicle voltage conversion controller in the disclosure selects only two phases of windings and corresponding switch modules to perform electric energy voltage conversion, thereby reducing the use and loss of one winding. Furthermore, sector division and winding selection also take into account the direction of the magnetic field and the quadrature axis of the motor, effectively reducing or eliminating generation of additional torque, thereby improving the safety during the voltage conversion.

Preferably, each switch module of the motor drive control circuit may further be connected in parallel with the diode as shown in FIG. 1. In other words, the switch bridge arms may each include two switch modules connected in series with each other, and each of the switch modules includes a MOSFET switch and a diode connected in parallel with each other. The vehicle voltage conversion controller 140 is further configured to control a switching control signal for the MOSFET switch to determine one of the MOSFET switch and the diode for turning on the switch module. In this way, control signals for the switches can be determined as needed. For example, in Q1, turning on the MOSFET and turning off the diode may be selected, or turning on the diode and turning off the MOSFET may be selected, where the former utilizes MOSFET channel conduction and results in smaller circuit losses.

After receiving the current rotor position angle of the motor, the corresponding two phases of windings are selected based on a sector correspondence to which reference is made, and the switching of switch bridge arms of the two phases of windings is controlled. Taking selection of sector 3 (selecting the A-phase and C-phase windings) in FIG. 2 as an example, switches Q3 and Q4 corresponding to the B-phase winding in FIG. 1 can be kept turned off, and for example, Q1 and Q5 can be turned on while Q2 and Q6 can be turned off (or relative to the second output terminal of the charging port being connected to another electrode of the traction battery, Q1 and Q5 are turned off and Q2 and Q6 are turned on). In this way, inductance generated by the A-phase and C-phase switch bridge arms of the motor drive control circuit and corresponding windings can be utilized to form a voltage conversion module (e.g., forming a parallel-interleaved boost converter or buck converter), thereby achieving voltage boosting or bucking functions.

In some embodiments, the control method may further allocate currents of the selected two phases of windings based on the rotor position angle, such that during the voltage conversion, a flux linkage synthesized by the two phases of windings contains no component on a direct axis (d-axis) perpendicular to a rotor flux linkage direction of the motor. Specifically, after the two phases of windings for voltage conversion have been selected, generation of undesired torque can be greatly reduced or eliminated. The disclosure can further determine current distribution between the selected two phases of windings based on a specific magnitude of the detected current rotor position angle, such that the flux linkage synthesized by the two phases of windings contains no component on the direct axis (d-axis) perpendicular to the rotor flux linkage direction of the motor, and an AC magnetic field (or AC ripple current) is on the q-axis to reduce rotor losses, while a DC magnetic field (or DC current) synthesized by the two phases is on the d-axis, thereby achieving zero torque output of the motor while reusing motor windings for a vehicle boost charging process. Furthermore, since an AC component in a charging current is a source of eddy current losses in magnet steel of the motor rotor during charging, and a q-axis inductance of a synchronous motor is relatively small, applying the AC component of the charging current on the q-axis is beneficial for reducing eddy current losses, thereby improving the charging efficiency.

In some other embodiments, the allocation methods of current in the control method may also be based on the rotor position angle, such that during the voltage conversion, a magnitude of a direct-axis component of a current vector synthesized by the two phases of windings is equal to a magnitude of a flux linkage of a permanent magnet of the motor divided by a difference between a direct-axis inductance and a quadrature-axis inductance of the motor. In this way, current can be effectively allocated in charging scenarios with large charging current, achieving zero torque output of the motor.

In some embodiments, the control method further includes making control signals for switching actions of switch bridge arms in the two phases of windings be phase-interleaved with each other, for example, as shown in waveforms of operating signals for switch modules corresponding to the selected two phases of windings in FIG. 5. In this way, an effect of significantly reducing eddy current losses of magnet steel in the windings can be achieved, and the impact of input/output ripple can be reduced to a greater extent.

According to another aspect of the disclosure, a computer-readable storage medium is provided, which has instructions stored therein, where the instructions, when executed by a processor, cause the processor to perform any one of the voltage conversion control methods 700 as described above. The computer-readable medium in the disclosure includes various types of computer storage media, and may be any usable medium accessible to a general-purpose or special-purpose computer. For example, the computer-readable medium may include a RAM, a ROM, an EPROM, an E²PROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. A combination thereof shall also fall within the scope of protection of the computer-readable media. An exemplary storage medium is coupled to a processor, so that the processor can read information from and write information to the storage medium. In another instance, the storage medium may be integrated into the processor. The processor and the storage medium may reside in an ASIC. The ASIC may reside in a user terminal. In an alternative solution, the processor and the storage medium may reside as discrete assemblies in a user terminal.

According to still another aspect of the disclosure, an electronic device is provided. The electronic device includes a memory and a processor. The memory stores instructions, where the instructions, when executed by the processor, cause the processor to perform the voltage conversion control method 700 as described above. The memory and the processor may be connected in a wired or wireless manner to achieve data transmission or exchange. For example, these components may be electrically connected to each other via one or more communication buses. The memory may be, for example, the aforementioned computer-readable storage medium. The processor may be a processing module with a signal processing capability, such as a general-purpose processor, including a central processing unit (CPU), a network processor (NP), etc.; the processor may alternatively be a digital signal processor (DSP), an application-specific integrated circuit (ASIC), a field-programmable gate array (FPGA) or another programmable logic device, discrete gate or transistor logic device, or discrete hardware component.

The foregoing descriptions are merely the implementations of the disclosure, but are not intended to limit the scope of protection of the disclosure. Any feasible variation or replacement conceived by a person skilled in the art within the technical scope disclosed in the disclosure shall fall within the scope of protection of the disclosure. Without conflicts, the implementations of the disclosure and features in the implementations may also be combined with each other. The scope of protection of the disclosure shall be subject to recitations of the claims.

## Claims

1. A vehicle voltage conversion system, **characterized by** comprising:
a three-phase motor;
a motor drive control circuit connected between a traction battery of the vehicle and the three-phase motor, and comprising three switch bridge arms connected in parallel with each other;
a charging port comprising a first output terminal and a second output terminal, the first output terminal being connected to a midpoint of a switch bridge arm corresponding to each winding of the three-phase motor via the respective winding, and the second output terminal being connected to one electrode of the traction battery; and
a vehicle voltage conversion controller configured to select, based on a rotor position angle of the three-phase motor and by controlling connection and disconnection of the three switch bridge arms, two phases of windings among the windings of the three-phase motor that generate larger inductance values to perform voltage conversion between the charging port and the traction battery.

2. The vehicle voltage conversion system according to claim 1, **characterized in that** the switch bridge arms each comprise two switch modules connected in series with each other, each of the switch modules comprising a MOSFET switch and a diode connected in parallel with each other, and the vehicle voltage conversion controller is further configured to control a switching control signal for the MOSFET switch to determine one of the MOSFET switch and the diode for turning on the switch module.

3. The vehicle voltage conversion system according to claim 1, **characterized in that** the vehicle voltage conversion controller is further configured to allocate currents of the selected two phases of windings based on the rotor position angle, such that during the voltage conversion, a flux linkage synthesized by the two phases of windings contains no component on a direct axis perpendicular to a rotor flux linkage direction of the three-phase motor.

4. The vehicle voltage conversion system according to claim 1, **characterized in that** the vehicle voltage conversion controller is further configured to allocate currents of the selected two phases of windings based on the rotor position angle, such that during the voltage conversion, a magnitude of a direct-axis component of a current vector synthesized by the two phases of windings is equal to a magnitude of a flux linkage of a permanent magnet of the three-phase motor divided by a difference between a direct-axis inductance and a quadrature-axis inductance of the three-phase motor.

5. The vehicle voltage conversion system according to any one of claims 1 to 4, **characterized in that** the vehicle voltage conversion controller is further configured to make control signals for switching of switch bridge arms in the two phases of windings be phase-interleaved with each other.

6. A vehicle voltage conversion controller, **characterized in that** the vehicle voltage conversion controller is configured to select, based on a rotor position angle of a three-phase motor of the vehicle and by controlling turn-on and turn-off of switch bridge arms of a motor drive control circuit of the three-phase motor, two phases of windings among the windings of the three-phase motor that generate larger inductance values to perform voltage conversion between a charging port and a traction battery of the vehicle, wherein the charging port comprises a first output terminal and a second output terminal, the first output terminal being connected to a midpoint of a switch bridge arm corresponding to each winding of the three-phase motor via the respective winding, and the second output terminal being connected to one electrode of the traction battery.

7. A vehicle, **characterized by** comprising the vehicle voltage conversion system according to any one of claims 1 to 5, or comprising the vehicle voltage conversion controller according to claim 6.

8. A vehicle voltage conversion control method, **characterized by** comprising the following steps:
receiving a detected rotor position angle of a three-phase motor of the vehicle; and
selecting, based on the rotor position angle and by controlling turn-on and turn-off of switch bridge arms of a motor drive control circuit of the three-phase motor, two phases of windings among the windings of the three-phase motor that generate larger inductance values to perform voltage conversion between a charging port and a traction battery of the vehicle,
wherein the charging port comprises a first output terminal and a second output terminal, the first output terminal being connected to a midpoint of a switch bridge arm corresponding to each winding of the three-phase motor via the respective winding, and the second output terminal being connected to one electrode of the traction battery.

9. The voltage conversion control method according to claim 8, **characterized in that** the switch bridge arms each comprise two switch modules connected in series with each other, each of the switch modules comprising a MOSFET switch and a diode connected in parallel with each other, and controlling of the switch modules of the switch bridge arms further comprises: determining one of the MOSFET switch and the diode for turning on the switch module.

10. The voltage conversion control method according to claim 8, **characterized by** further comprising:
allocating currents of the selected two phases of windings based on the rotor position angle, such that during the conversion, a flux linkage synthesized by the two phases of windings contains no component on a direct axis perpendicular to a rotor flux linkage direction of the three-phase motor.

11. The voltage conversion control method according to claim 8, **characterized by** further comprising:
allocating currents of the selected two phases of windings based on the rotor position angle, such that during the conversion, a magnitude of a direct-axis component of a current vector synthesized by the two phases of windings is equal to a magnitude of a flux linkage of a permanent magnet of the three-phase motor divided by a difference between a direct-axis inductance and a quadrature-axis inductance of the three-phase motor.

12. The voltage conversion control method according to any one of claims 8 to 11, **characterized by** further comprising:
making control signals for switching of switch bridge arms in the two phases of windings be phase-interleaved with each other.

13. A computer-readable storage medium having instructions stored therein, **characterized in that** the instructions, when executed by a processor, cause the processor to perform the voltage conversion control method according to any one of claims 8 to 12.

14. An electronic device, comprising a memory and a processor, **characterized in that** the memory stores instructions which, when executed by the processor, cause the processor to perform the voltage conversion control method according to any one of claims 8 to 12.
